# EUROPEAN PATENT SPECIFICATION

(11) **EP 2 916 014 B1**
(45) Date of publication and mention of the grant of the patent: **08.03.2017**
(21) Application number: 14382076.9
(22) Date of filing: 03.03.2014
(51) Int. Cl.: F16B 5/00, F16B 12/12

(54) **SYSTEM FOR CONNECTING COMPONENTS**
SYSTEM ZUM VERBINDEN VON BAUTEILEN
SYSTÈME DE CONNEXION DE COMPOSANTS

(43) Date of publication of application: 09.09.2015
(73) Proprietor: Comercial Salgar S.A.U., 50080 Zaragoza (ES)
(72) Inventor: Gimeno Esteban, Pedro Jesus, 50011 Zaragoza (ES)
(74) Representative: Pons

(56) References cited:
- EP-A2- 2 065 526
- WO-A1-2011/110977
- GB-A- 2 463 449
- JP-A- 2002 325 636
- US-A1- 2008 213 040

## Description

### OBJECTIVE OF THE INVENTION

The present invention may be included within the technical field of the assembly of products from constituent components. In particular, the object of the invention relates to a system for connecting components to assemble a particular product.

### BACKGROUND OF THE INVENTION

Clip-type connection systems, that permit a reversible, and generally hidden, connection between two components are well-known and used in a wide variety of applications.

Additionally, document US2008/213040A1 (MORZE-REICHART) relates to a shear connector, having a number of pins, for connecting at least two components. The connector is embedded at least partially and preferably completely in one of the components and the pins engage in corresponding cavities in the component that carries the connector. The connector is configured in at least two section s and is provided with element or co-operates with elements that are used to interconnect the two or more sections of the connector. The document also relates to a system of interconnected components.

Also the document EP2065526A2 (ZOLLER) discloses a system having connecting parts for connecting structural elements i.e. chip board, and furniture elements with each other. A recess extending in a longitudinal direction of the elements allows insertion of the connecting parts. The connecting part has a longitudinal groove and other connecting part has a longitudinal rib, in which the recess of the elements is inserted. The latter connecting part including the rib is retractable into the groove of the connecting part perpendicular to a connecting direction of the elements for connection of the elements. An independent claim is also included for a connection device.

Finally, the document WO2011/110977A1 (PLUS KK) describes a wedge type connection to connect unmovable furniture parts. The connection has created between the surface of the base body internal continuous bevel slot and the base body external surface a longitudinal trapezoid extension, becoming wider in the direction of the narrowing continuous bevel slot. The longitudinal slot passing through the whole length of the longitudinal trapezoid extension is created in this extension. The longitudinal slot creates on the extension two longitudinal ribs and the internal one of the two ribs is arranged in a flexibly deformable way in relation to the wedge body. The base body, as well as the wedge body, are created ready-made, from plastic material.

### DESCRIPTION OF THE INVENTION

The present invention describes a system for connecting components that is of universal application and is intended to connect a first component to a second component. The system according to the invention comprises a first body and a second body, where the first body is intended to be attached to a first component of the two components, and the second body is intended to be attached to a second component of the two components.

A preferred, though not exclusive, field of application is that of the construction of furniture, because items of furniture are made up of slats and boards that are well adapted to being connected by the connection system of the invention to assemble the furniture, as described below.

The invention is characterized in that each of the bodies incorporates an attachment portion equipped with means of attachment to be attached to the corresponding component, as well as each body additionally incorporates a connection portion equipped with a means of connection, to connect the bodies to each other according to a form closure. The means of connection comprise: in the first body, a male wedge, of growing trapezoidal section and, in the second body, a cavity to accommodate the wedge according to a form closure. Additionally, a protuberance-type restriction means is incorporated, which are situated on the male wedge, at its end and configured so as to protrude from said end out of the cavity, to restrict slipping of the bodies with respect to each other.

By employing the described system of connection as an alternative to clip type connections, a sufficiently solid connection is achieved between the two components, and at the same time a higher degree of discretion is achieved, because the bodies are hidden and the connection is reversible, allowing the bodies to be removed and reused.

On the other hand, the components of the described system of connection can be simply and inexpensively attached to the components to be connected. In particular, the means of attachment described does not require the carrying out of operations on the components such as CNC milling or the like, which would greatly increase the costs.

### DESCRIPTION OF THE DRAWINGS

To complement the description being made and in order to aid a better understanding of the characteristics of the invention, according to a preferred example of practical embodiment of the same, a set of drawings is attached as an integral part of said description, where, in a purely illustrative and non limiting way, the following is represented:
Figure 1.- Shows a perspective view of the first body of the connection system according to the present invention.
Figure 2.- Shows a perspective view of the second body of the connection system according to the present invention.
Figure 3.- Shows a perspective view of the first body of figure 1 and the second body of figure 2 in a connected position.

### PREFERRED EMBODIMENT OF THE INVENTION

The system for connecting components, of universal application, according to the present invention, is used for connecting together a first component and a second component, and is useful in many applications, among which stands out, for example, the assembly of furniture, where the components are usually boards.

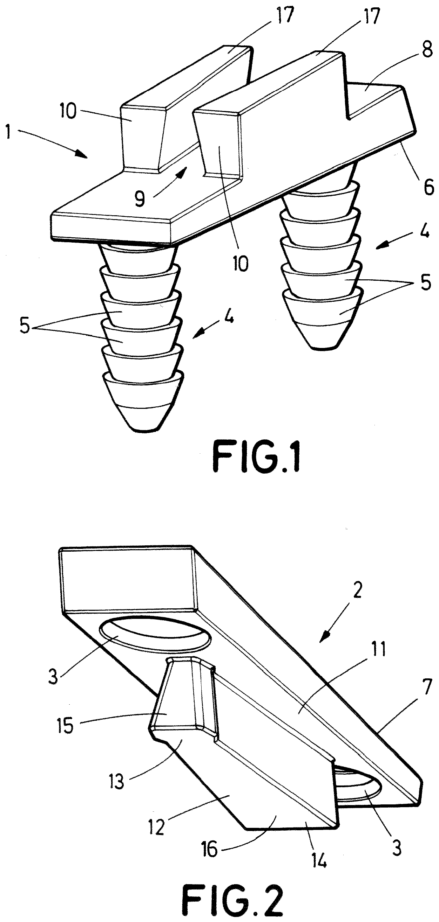

The system comprises a first body (2), shown in figure 2, and a second body (1) shown in figure 1. Returning to figure 2, the first body (2) comprises a first attachment portion to be attached to the first component, and a first connection portion. Similarly, returning to figure 1, the second body (1) comprises a second attachment portion to be fixed to the second component, and a second connection portion to connect, in cooperation with the first connection portion, the first body (2) to the second body (1) according to a form closure.

The first body (2) and the second body (1) are preferably manufactured integrally, for example by moulding or Injection, from polymeric materials.

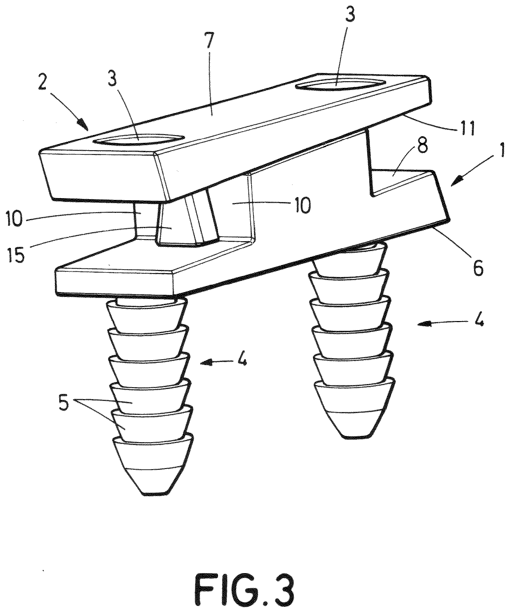

The connection system further comprises attachment means, shown in Figures 1 to 3, to fix the attachment portions to their respective components, preferably in a detachable way, so that the bodies (1, 2) may be reused. In particular, the attachment means may comprise, for example, two holes (3), see figure 2, located on at least one of the attachment portions, to screw the body (1, 2) or bodies (1, 2) to the corresponding component. Alternatively, also by way of example, the attachment means may comprise rods (4), see figure 1, also incorporated in at least one attachment portion to be stuck to the corresponding component. The rods (4) can be barbs, as depicted in figures 1 and 3, which incorporate retention means (5) on their periphery, for example, frustoconical retention protrusions, to provide resistance to separation. The first attachment portion and the second attachment portion comprise a preferably flat first attachment face (7) and second attachment face (6) respectively, designed to be in contact with the corresponding component, where the attachment means are incorporated on the attachment faces (6, 7).

Respective first connection means and second connection means are located in the first connection portion and the second connection portion. The first connection means comprise: a first, preferably flat, connection surface (11), and a male wedge (12), whose cross-section is trapezoidal, and growing from a first end (13) of smaller section to a second end (14) of larger section, where the male wedge (12) starts from the first connection surface (11) and has a first free surface (16) opposing the first connection surface (11). Meanwhile, the second connection means comprise: a second connection surface (8), which is preferably flat; and a cavity (9), of trapezoidal configuration corresponding to the male wedge (12), to insert the wedge male (12) in accordance with a form closure. As shown in the figures, the cavity (9) is defined by divergent walls (10) that start on the second connection surface (8), wherein the walls (10) comprise second free surfaces (17) opposing the second connection surface (8).

As shown in figure 3, the first connection surface (11) of the first connection means is configured preferentially to make contact to the second free surfaces (17), whereas the second connection surface (8) of the second connection means is configured preferentially to make contact with the first free surface (16) of the male wedge (12), to allow relative sliding of the two bodies (1, 2) with respect to each other. Preferably, the first connection surface (11) is not parallel to the first attachment face (7), as well as correspondingly the second connection surface (8) is not parallel to the second attachment face (6).

The male wedge (12) and the cavity (9) have respective trapezoidal sections that favour a restriction to a movement that separates the first body (2) from the second body (1). Also, the growing character of the trapezoidal sections provides more secure attachment of the bodies (1, 2) with respect to each other in case of sliding.

Additionally, restriction means are incorporated to restrict, through elastic deformation, relative longitudinal displacement of the first body (2) and the second body (1) with respect to each other, once they are connected. In particular, the restriction means may be located on the male wedge (12) to restrict relative movement of the male wedge (12) and the cavity (9) with respect to each other. According to an example shown in figure 3, the male wedge (12) includes a connection protuberance (15) made in hard and elastically deformable material located at the first end (13), so that, under conditions of use, that is, when the male wedge (12) is inserted into the cavity (9), the male wedge (12) protrudes from the first end (13) of the wedge (12) out of the cavity (9). Preferably, the connection protuberance (15) is formed integrally with the male wedge (12).

To connect both components to each other, first the two bodies (1, 2) of one or more connection systems are attached to the corresponding components to be connected. Subsequently, the male wedge (12) is connected to the cavity (9) of the corresponding bodies making the male wedge (12) slide into the cavity (9), which, due to the elastic nature of the connection protuberance (15) and the growing trapezoidal section of the male wedge (12) and the cavity (9), a snap form closure results.

## Claims

1. System for connecting components, for interconnecting a first component to a second component where the system comprises:
- a first body (2) comprising:
- a first attachment portion to attach the first body (2) to the first component; and
- a first connection portion;
- a second body (1), comprising;
- a second attachment portion for attaching the second body (1) to the second component and
- a second connection portion for, in cooperation with the first connection portion, connecting the first body (2) to the second body (1) according to a form closure; and
- attachment means located in the bodies (1, 2) for fixing the bodies (1, 2) to their respective components;
wherein the first connection portion includes first connection means, comprising a male wedge (12) having a trapezoidal cross-section growing from a first end (13) of smaller dimensions to a second end (14) of greater dimensions; as well as the second connection portion includes a second connection means comprising a cavity (9) having a trapezoidal cross-section corresponding to that of the male wedge (12) for allocating the male wedge (12) and providing a connection between the male wedge (12) and the cavity (9) in accordance with a form closure;
wherein the male wedge (12) further comprises restriction means for restricting by elastic deformation the relative longitudinal displacement of the first body (1) and the second body (2) with respect to each other, once they are connected; **characterized in that** the restriction means comprise connection protuberances (15) located at the first end (13) of the male wedge (12), and configured so as to protrude from the first end (13) of the wedge (12) out of the cavity (9).

2. System for connecting components according to claim 1, **characterized in that** the first connection means comprise a first connection surface (11) wherefrom the male wedge (12) starts; as well as the second connection means comprise a second connection surface (8) wherefrom walls (10) defining the cavity (9) start,
wherein the male wedge (12) has a first free surface (16) opposing the first connection surface (11), as well as the walls (10) have each a second free surface (17) opposing the second connection surface (8),
wherein the first connection surface (11) is designed to make contact with the second free surfaces (17), whereas the second connection surface (8) is designed to make contact with the first free surface (16), to allow relative sliding of both bodies (1, 2) with respect to each other.

3. System for connecting components according to any one of the preceding claims, **characterized in that** the attachment means comprise two holes (3) located in at least one of the attachment portions, to screw the body (1, 2) or the bodies (1, 2) to the corresponding component.

4. System for connecting components according to any one of the preceding claims, **characterized in that** the attachment means comprise rods (4) incorporated in at least one of the attachment portions to be stuck to the corresponding component.

5. System for connecting components according to claim 4, **characterized in that** the rods (4) are barbs that incorporate retention means (5) at their periphery.

6. System of connection of components according to claim 5, **characterized in that** the retention means (5) comprise frustoconical retention protrusions.

7. System for connecting components according to any one of the preceding claims, **characterized in that** the first attachment portion comprises a first attachment face (7) intended to be in contact with the first component, as well as the second attachment portion comprises a second attachment face (6) intended to be in contact with the second component, wherein the attachment means are incorporated on said first (7) and second (6) attachment faces.

8. System of connection of components according to claims 2 and 7, **characterized in that** the first connection surface (11) is not parallel to the first attachment face (7), as well as correspondingly the second connection surface (8) is not parallel to the second attachment face (6).

## Patentansprüche

1. System zum Verbinden von Bauteilen, zum gegenseitigen Verbinden eines ersten Bauteils mit einem zweiten Bauteil, wobei das System umfasst:
- einen ersten Körper (2), der
- einen ersten Befestigungsbereich zur Befestigung des ersten Körpers (2) am ersten Bestandteil und
- einen ersten Verbindungsbereich umfasst,
- einen zweiten Körper (1), der
- einen zweiten Befestigungsbereich zur Befestigung des zweiten Körpers (1) am zweiten Bestandteil und
- einen zweiten Verbindungsbereich zum Verbinden des ersten Körpers (2) mit dem zweiten Körper (1) unter Beteiligung des ersten Verbindungsbereichs entsprechend einem Formschluss umfasst, und
- in den Körpern (1, 2) vorhandene Befestigungsmittel zur Fixierung der Körper (1, 2) an ihre jeweiligen Bauteile;
wobei der erste Verbindungsbereich erste Verbindungsmittel beinhaltet, die einen männlichen Keil (12) mit einem trapezförmigen Querschnitt umfassen, der von einem ersten Ende (13) kleinerer Ausmaße bis zu einem zweiten Ende (14) größerer Ausmaße verläuft; und der zweite Verbindungsbereich zweite Verbindungsmittel beinhaltet, die eine Aushöhlung (9) mit einem trapezförmigen Querschnitt umfassen, der dem des männlichen Keils (12) entspricht, zur Aufnahme des männlichen Keils (12) und zur Herstellung einer Verbindung zwischen dem männlichen Keil (12) und der Aushöhlung (9) entsprechend einem Formschluss;
wobei der männliche Keil (12) weiterhin Begrenzungsmittel zur Begrenzung der relativen Längsverschiebung des ersten Körpers (1) und des zweiten Körpers (2) zueinander durch elastische Verformung nach deren Verbinden umfasst;
**dadurch gekennzeichnet, dass** die Begrenzungsmittel Verbindungsvorsprünge (15) umfassen, die sich am ersten Ende (13) des männlichen Keils (12) befinden und so ausgebildet sind, dass sie vom ersten Ende (13) des Keils (12) aus der Aushöhlung (9) hervorstehen.

2. System zum Verbinden von Bauteilen nach Anspruch 1, **dadurch gekennzeichnet, dass** die ersten Verbindungsmittel eine erste Verbindungsfläche (11) umfassen, von der der männliche Keil (12) ausgeht; und die zweiten Verbindungsmittel eine zweite Verbindungsfläche (8) umfassen, von der die Aushöhlung (9) definierende Wände (10) ausgehen, wobei der männliche Keil (12) eine erste, der ersten Verbindungsfläche (11) gegenüberliegende freie Oberfläche (16) aufweist und die Wände (10) jeweils eine zweite, der zweiten Verbindungsfläche (8) gegenüberliegende freie Oberfläche (17) aufweist,
wobei die erste Verbindungsfläche (11) zum Herstellen eines Kontakts mit der zweiten freien Oberfläche (17) eingerichtet ist, während die zweite Verbindungsfläche (8) zum Herstellen eines Kontakts mit der ersten freien Oberfläche (16) eingerichtet ist, um das relative Gleiten der beiden Körper (1, 2) zueinander zu ermöglichen.

3. System zum Verbinden von Bauteilen nach irgendeinem der vorhergehenden Ansprüche, **dadurch gekennzeichnet, dass** die Befestigungsmittel zwei Bohrungen (3) umfassen, die sich in mindestens einem der Befestigungsbereiche befinden, um den Körper (1, 2) oder die Körper (1, 2) an das entsprechende Bauteil zu schrauben.

4. System zum Verbinden von Bauteilen nach irgendeinem der vorhergehenden Ansprüche, **dadurch gekennzeichnet, dass** die Befestigungsmittel Stäbe (4) umfassen, die in mindestens einem der Befestigungsbereiche enthalten sind, um in das entsprechende Bauteil gesteckt zu werden.

5. System zum Verbinden von Bauteilen nach Anspruch 4, **dadurch gekennzeichnet, dass** die Stäbe (4) Widerhaken sind, die an ihrem Umfang Rückhaltemittel (5) enthalten.

6. System zum Verbinden von Bauteilen nach Anspruch 5, **dadurch gekennzeichnet, dass** die Rückhaltemittel (5) kegelstumpfförmige Rückhalteausbuchtungen umfassen.

7. System zum Verbinden von Bauteilen nach irgendeinem der vorhergehenden Ansprüche, **dadurch gekennzeichnet, dass** der erste Befestigungsbereich eine erste Befestigungsseite (7) umfasst, die dazu bestimmt ist, mit dem ersten Bestandteil in Kontakt zu stehen, und der zweite Befestigungsbereich eine zweite Befestigungsseite (6) umfasst, die dazu bestimmt ist, mit dem zweiten Bestandteil in Kontakt zu stehen, wobei die Befestigungsmittel in den besagten ersten (7) und zweiten (6) Befestigungsseiten enthalten sind.

8. System zum Verbinden von Bauteilen nach den Ansprüchen 2 und 7, **dadurch gekennzeichnet, dass** die erste Verbindungsfläche (11) nicht parallel zur ersten Befestigungsseite (7) verläuft und dementsprechend die zweite Verbindungsfläche (8) nicht parallel zur zweiten Befestigungsseite (6) verläuft.

## Revendications

1. Système de connexion de composants, pour l'interconnexion d'un premier composant à un deuxième composant où le système consiste en :
- un premier corps (2) qui comprend :
- une première partie de fixation pour la fixation du premier corps (2) au premier composant ; et
- une première partie de connexion ;
- un deuxième corps (1) qui comprend ;
- une deuxième partie de fixation pour la fixation du deuxième corps (1) au deuxième composant et
- une deuxième partie de connexion pour la connexion, en coopération avec la première partie de connexion, du premier corps (2) au deuxième corps (1) conformément à une complémentarité de forme ; et
- des moyens de fixation situés dans les corps (1, 2) pour la fixation des corps (1, 2) avec leurs composants respectifs ;
où la première partie de connexion comprend des premiers moyens de connexion, comprenant une clavette mâle (12) de coupe transversale trapézoïdale croissante à partir d'une première extrémité (13) aux dimensions inférieures par rapport à une deuxième extrémité (14) ayant des dimensions supérieures ; la deuxième partie de connexion comprend également des deuxièmes moyens de connexion comprenant une cavité (9) de coupe transversale trapézoïdale correspondant à celle de la clavette mâle (12) afin d'y loger la clavette mâle (12) et d'établir une connexion entre la clavette mâle (12) et la cavité (9) conformément à une complémentarité de forme ;
où la clavette mâle (12) comprend aussi des moyens de restriction prévus pour restreindre par déformation élastique le déplacement longitudinal relatif entre le premier corps (1) et le deuxième corps (2), une fois connectés ;
**caractérisé en ce que** les moyens de restriction comprennent des protubérances de connexion (15) situées sur la première extrémité (13) de la clavette mâle (12), et configurées de sorte à dépasser de la cavité (9) depuis la première extrémité (13) de la clavette (12).

2. Système de connexion de composants selon la revendication 1, **caractérisé en ce que** les premiers moyens de connexion comprennent une première surface de connexion (11) à partir de laquelle se dresse la clavette mâle (12) ; de même pour les deuxièmes moyens de connexion qui comprennent une deuxième surface de connexion (8) à partir de laquelle se dressent des parois (10) qui définissent la cavité (9),
où la clavette mâle (12) a une première surface libre (16) opposée à la première surface de connexion (11), et chacune des parois (10) possède aussi une deuxième surface libre (17) opposée à la deuxième surface de connexion (8),
où la première surface de connexion (11) est conçue pour entrer en contact avec las deuxièmes surfaces libres (17), tandis que la deuxième surface de connexion (8) est conçue pour entrer en contact avec la première surface libre (16), afin de permettre un glissement relatif entre les deux corps (1, 2).

3. Système de connexion de composants selon l'une quelconque des revendications précédentes, **caractérisé en ce que** les moyens de fixation comprennent deux orifices (3) situés au moins dans l'une des portions de fixation, pour visser le corps (1, 2) ou les corps (1, 2) au composant correspondant.

4. Système de connexion de composants selon l'une quelconque des revendications précédentes, **caractérisé en ce que** les moyens de fixation comprennent de barres (4) intégrées au moins dans l'une des portions de fixation qui doit être fixée au composant correspondant.

5. Système de connexion de composants selon la revendication 4, **caractérisé en ce que** les barres (4) sont des picots qui incluent des moyens de retenue (5) sur leur périphérie.

6. Système de connexion de composants selon la revendication 5, **caractérisé en ce que** les moyens de retenue (5) comprennent des saillies de retenue tronconiques.

7. Système de connexion de composants selon l'une quelconque des
revendications précédentes, **caractérisé en ce que** la première partie de fixation comprend une première face de fixation (7) destinée à entrer en contact avec le premier composant, ainsi que la deuxième partie de fixation qui comprend une deuxième face de fixation (6) destinée à entrer en contact avec le deuxième composant,
où les moyens de fixation sont incorporées sur lesdites première (7) et deuxième (6) faces de fixation.

8. Système de connexion de composants selon les revendications 2 et 7, **caractérisé en ce que** la première surface de connexion (11) n'est pas parallèle à la première face de fixation (7), de même que la deuxième surface de connexion (8) n'est pas parallèle à la deuxième face de fixation (6).
